# EUROPEAN PATENT SPECIFICATION

(11) **EP 1 341 064 B1**
(45) Date of publication and mention of the grant of the patent: **15.03.2006**
(21) Application number: 03004197.4
(22) Date of filing: 27.02.2003
(51) Int. Cl.: G05B 19/35, B60R 1/07

(54) **A control system for adjusting and storing the attitude of the rear-view mirrors of a motor vehicle and a respective attitude storage and resetting circuit module**
Steuerungssystem zur Einstellung und Speicherung der Lage von Kraftfahrzeugrückspiegel und Modul zur Lagespeicherung und Rücksetzung
Système de commande pour ajuster et mémoriser l'attitude des rétroviseurs d'un véhicule à moteur ainsi que son module de mémorisation d'attitude et de remise à zéro

(30) Priority: 01.03.2002 IT TO20020177
(43) Date of publication of application: 03.09.2003
(73) Proprietor: MAGNETI MARELLI SISTEMI ELETTRONICI S.p.A., 20011 Corbetta (Milano) (IT)
(72) Inventor: Gillio, Sergio, 10124 Torino (IT); Guerra, Andrea, 10142 Torino (IT); Robasto, Maurizio, 10038 Verolengo (Torino) (IT)
(74) Representative: Deambrogi, Edgardo

(56) References cited:
- WO-A-96/05080
- DE-A- 19 738 609
- US-A- 4 853 687
- US-A- 4 929 878

## Description

The present invention relates to control systems for adjusting and storing the attitude of the rear-view mirrors of a motor vehicle and, more specifically, to a control system according to the preamble to Claim 1, and to a circuit module for the system.

There are known electronic adjustment systems which enable the driver personally to adjust the orientation of the reflective elements of the rear-view mirrors to the correct positions according to his own driving position, by means of one or more control buttons (generally referred to as joysticks), for example, after he has adjusted the attitude of the driver's seat to reach a convenient and suitable position.

Prestige motor vehicles currently on the market offer a high degree of comfort, providing, for example, a capability to store automatically the attitude and/or the orientation of some on-board devices for various people who may be present as drivers.

These systems require intervention by the driver on a first occasion in order to set the preferred seat attitude and rear-view mirror orientation and enable the adjustments made to be stored so that, when that driver comes to drive the vehicle again on subsequent occasions he can reset his arrangement simply by operating the automatic adjustment mechanism in order to perform the adjustment operations previously learned.

WO 96/05080 discloses a method and device for controlling tilting angles of motor-driven rearview mirrors of automobiles. A tilting angle control device includes positional sensors for detecting positional displacement of a mirror panel. A processor is arranged to compare current angle of a mirror panel with positional data relative to predetermined conditions, read out of a memory unit, and to output a control signal to a motor drive circuit for driving a mirror drive motor to tilt the mirror panel.

It is to be expected that these solutions will also spread to lower-category vehicles, albeit as options or as market accessories for enhancing the equipment of a basic model.

During the adaptation from an equipment in which the rear-view mirror attitude-storage function is not provided to one which provides for this function, the solutions used up to now require the removal of the circuit module associated with the control button provided and the introduction of a different module which combines the functions of the control button and of the recall of stored positions in an attitude-storage and electromechanical movement-control circuit arrangement.

This solution is extremely complex and expensive.

Alternatively, a basic model may in any case be equipped, from the time of its manufacture, with a control system complete with every functional capability and hence, in the final analysis, with control modules having resources which will remain unused in equipment which does not have storage.

The installation of these modules has the disadvantage that it is an expensive choice and affects the selling price of the vehicle.

The object of the present invention is to provide a satisfactory solution to the problem of adding the rear-view mirror attitude storage function to a basic vehicle model in which only the movement function, without memory, was provided initially, without the need to replace the system components which are already present.

According to the present invention, this object is achieved by means of a control system having the characteristics claimed in Claim 1.

Particular embodiments of the invention are defined in the dependent claims.

A further subject of the invention is a circuit module according to Claim 16.

In summary, the present invention is based on the principle of providing a mirror-attitude storage and resetting module which can be interposed between each mirror and the electromechanical device for controlling its movement. This module does not affect the mirror movement functions that belong to the pre-existing system, for which it performs the role simply of a signal repeater, but adds the functions of detection and storage of the attitude reached and optionally of resetting of a desired attitude. It is provided in combination with sensor means associated with the reflective element of each mirror and with a unit for managing the storage and the resetting of the arrangements stored.

Further characteristics and advantages of the invention will be described in greater detail in the following detailed description of a preferred embodiment thereof, given by way of non-limiting example, with reference to the appended drawings, in which:
Figure 1 is a block diagram of a control system of the invention for adjusting and storing the attitude of the rear-view mirrors of a motor vehicle, and
Figure 2 is a block diagram of an attitude storage and resetting circuit module to be used in the system of Figure 1.

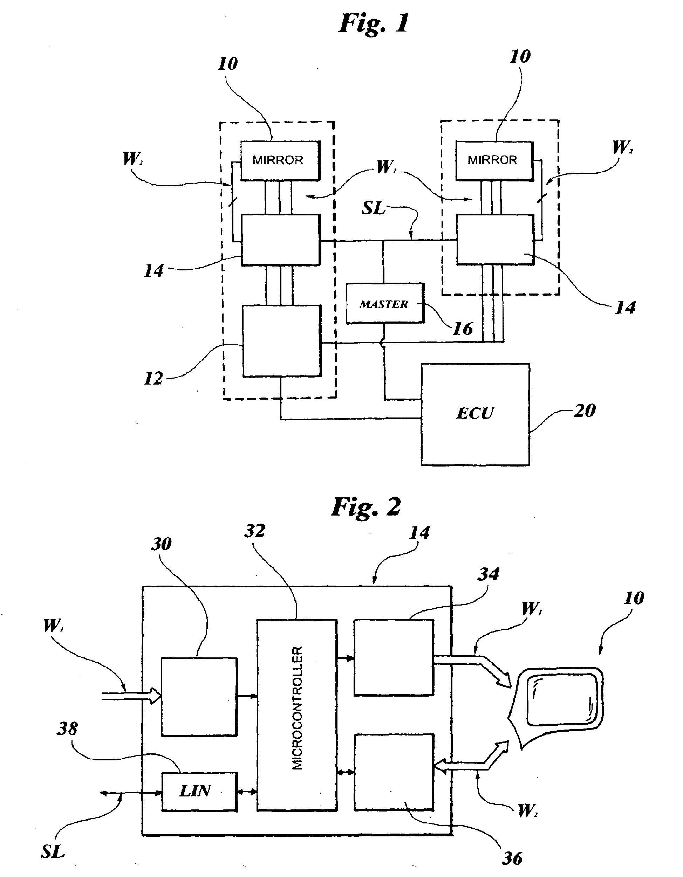

The basic elements of a control system of the invention are shown in Figure 1.

The system comprises a pair of rear-view mirrors 10 connected to an attitude-adjustment control unit 12 which is connected to one or more control buttons or joysticks, not shown, arranged, for example, on an armrest of one or both doors of the vehicle, or on the dashboard, or even on the central tunnel, in order to receive the movement commands from a user.

The term rear-view mirror is intended to define in the following description both the external mirrors and the internal mirrors of the vehicle and, more precisely, the reflecting elements of these mirrors, the orientation of which is adjustable by the driver or by a passenger in order to afford a desired rear field of view.

Each of the mirrors 10 is provided with a pair of motors of known type for moving the respective reflecting element by pivoting it about its vertical and horizontal axes within a predetermined angular range.

Naturally, although a pair of rear-view mirrors is described, the description is also intended to apply to systems which also provide for the adjustment of the internal rear-view mirror, which is advantageously motor-driven.

The connection between the control unit 12 and each mirror 10 is achieved by means of three first wires w₁ for transferring a control signal to the first motor, a control signal to the second motor, and a common earth reference, respectively.

Two identical attitude storage and resetting control circuit modules 14 are connected electrically between the unit 12 and the mirrors 10, so as to be interposed in the three-wire connection.

The mirrors 10 have sensor means for detecting the angular position of the reflecting element, for example, potentiometric resistive sensors associated with the respective motors, and the respective modules 14 are connected to these sensors by means of a second set of wires w₂, of which there are also preferably three, and which correspond to angular position signals in a horizontal plane, and in a vertical plane, and to common earth reference signals.

It will be noted that the construction proposed by the present invention in the following description is provided purely by way of non-limiting example of the scope of the invention. This applies in particular with regard to the possibility of providing a single attitude-storage control module common to both rear-view mirrors.

A person skilled in the art will easily be able to implement the present invention in this embodiment without, however, departing form the principles set out herein.

The control modules 14 are connected, by means of a serial line SL, to an attitude-storage management unit 16 which may be connected directly to control instruments available to a user or may be combined with a unit for managing the automatic adjustment and storage of the attitude of the driver's seat.

Preferably, the management unit 16 is also connected to a central electronic control unit (ECU) 20 of the vehicle for the exchange of data with the system for the intelligent management of the passenger-compartment and bodywork functions, via a CAN network.

A control module 14 is shown schematically in detail in Figure 2.

It comprises: a circuit 30 for managing digital inputs, for connection to the first wires w₁ in order to receive the signals for controlling the movement of the mirrors, a microcontroller 32, and a driver circuit 34 having a number of outputs equal to the number of digital inputs, for emitting power signals for driving the electric motors of the mirrors.

The module 14 also includes a circuit 36 for managing analog inputs, for connection to the second wires w₂ for receiving signals indicative of the current position adopted by the reflective element of the mirror in a predetermined reference system.

The microcontroller 32 is interfaced with the serial line SL for communication with the management unit 16 by means of a corresponding interface circuit 38.

The control modules 14, which are interposed in the connection between the mirror 10 and the control unit 12, receive as inputs the digital control signals emitted by the unit 12 on the basis of the instructions received from the user and repeat them at their outputs towards the motors of the respective mirror.

The control modules read the angle of orientation reached by the respective mirror, by means of the analog inputs.

When a user requires the storage of an attitude which has been set, the attitude-storage management unit 16 assigns a memory index identifying the attitude data to be stored and sends a request signal to the modules 14 on the serial line SL, for example, in accordance with a LIN communications protocol, by means of which it communicates the storage index.

In a preferred embodiment, the unit 16 can operate automatically in dependence on the adjustment and storage of the driver's-seat attitude and, in this case, the storage index communicated to the modules 14 corresponds to the entry index assigned to the driver's-seat attitude.

The orientation of each mirror 10 is stored locally in a memory register of the microcontroller 32 as a pair of coordinates indicative of the angular position reached by the reflecting element within a predetermined reference system.

When a user recalls a specific memory index in order to reset a previously stored arrangement, the unit 16 transmits a request to this effect to the modules 14 on the line SL.

The microcontroller 32 receives the request from the interface circuit 38 and obtains reading access to the local memory in order to extract the attitude data stored. It generates the digital mirror-movement control signals for the driving circuit 34 on the basis of these data and of the current angular position of the mirror, detected instantaneously by means of the analog inputs and the circuit 36. Finally, the driver circuit will emit the power signals for driving the electric motors of the mirrors.

The electronic architecture of the control system is advantageously modular so that the attitude-storage function can be added simply by the addition of one or more control modules and with the use of the components of the system which exist in the basic equipment, without the need for expensive specific provision. When the devices which govern the adjustment of the mirrors are disposed in the door space, this enables the management of other passenger-compartment and bodywork functions to be implemented independently by separate modules housed in the same space.

## Claims

1. A system for controlling the attitude of a reflecting element of a rear-view mirror (10) in a vehicle, provided with:
attitude-adjusting circuit means (12) adapted to receive movement commands from a user and to drive movement means of the reflecting element;
sensor means for detecting the orientation of the reflecting element in a predetermined reference system, and
a management unit (16) adapted to control the storage of the attitude reached or the resetting of an attitude previously stored,
**characterised in that** it includes a separate control circuit module (14) which is interposed between the attitude-adjusting circuit means (12) and the movement means and which comprises:
- first inputs adapted to receive from the adjustment means (12) adjustment signals indicative of the movement commands to be imparted to the reflecting element,
- second inputs adapted to receive from the sensor means position signals indicative of the orientation of the reflecting element, and
- control outputs adapted to emit signals for driving the movement means,
the separate control circuit module (14) being adapted to transfer the adjustment signals to the control outputs in a first operative condition, to store attitude data on the basis of the position signals received in a second operative condition, and to generate driving signals at the control outputs on the basis of a comparison between the attitude data stored and signals relating to current position in a third operative condition.

2. A system according to Claim 1, **characterized in that** the management unit (16) is connected directly to control instruments available to a user.

3. A system according to Claim 1, **characterized in that** the management unit (16) is combined with a unit for managing the automatic adjustment and storage of the attitude of the driver's seat.

4. A system according to Claim 2 or Claim 3, **characterized in that** the management unit (16) is arranged to assign a memory index identifying the attitude data to be stored and to communicate the memory index to the separate control circuit module (14).

5. A system according to Claim 3, **characterized in that** the management unit (16) is arranged to communicate to the separate control circuit module (14) a memory index corresponding to an entry index assigned to the respective driver's-seat attitude.

6. A system according to any one of the preceding claims, **characterized in that** the separate control circuit module (14) is connected to the attitude-storage management unit (16) by means of a serial line (SL).

7. A system according to any one of the preceding claims, **characterized in that** it comprises a separate control circuit module (14) associated with each rear-view mirror (10).

8. A system according to any one of Claims 1 to 6, **characterized in that** it comprises a single separate control circuit module (14) common to all of the rear-view mirrors (10) of the vehicle.

9. A system according to any one of the preceding claims, **characterized in that** the control outputs are connected to the movement means of the reflecting element of a mirror (10) by means of three wires (w₁) for transferring a first driving signal to a motor for pivoting about a first axis, a second driving signal to a motor for pivoting about a second axis, and a common reference signal, respectively.

10. A system according to any one of the preceding claims, **characterized in that** the second inputs are connected to the sensor means associated with a mirror (10) by means of three wires (w₂) for receiving signals relating to angular position in a horizontal plane and to angular position in a vertical plane, and a common reference signal, respectively.

11. A system according to Claim 10, **characterized in that** the sensor means for detecting the angular position of the reflecting element comprise potentiometric resistive sensors associated with the pivoting motors.

12. A system according to any one of the preceding claims, **characterized in that** the management unit (16) is connected to a central electronic unit (20) for controlling passenger-compartment and bodywork functions of the vehicle.

13. A system according to any one of the preceding claims, **characterized in that** the separate control circuit module (14) comprises:
a circuit (30) for managing digital inputs, for receiving the mirror-movement adjustment signals (10),
a microcontroller (32) including storage means,
a driver circuit (34) having a number of outputs equal to the number of digital inputs and adapted to emit power signals for driving the electric motors of the mirrors (10) and
a circuit (36) for managing analog inputs, for receiving signals indicative of the angular position currently adopted by the reflecting element of the mirror (10).

14. A system according to Claim 13, **characterized in that** the microcontroller (32) is interfaced with the serial line (SL) for communication with the management unit (16) by means of a corresponding interface, circuit (38).

15. A system according to Claim 14, **characterized in that** the orientation of a mirror (10) is stored locally in a memory register of the microcontroller (32) as a pair of coordinates indicative of the angular position reached by the reflecting element within a predetermined reference system.

16. A separate control circuit module (14) for storing and resetting the attitude of a reflecting element of at least one rear-view mirror (10) in a vehicle, for use in a system according to Claims 1 to 15.

## Patentansprüche

1. System zum Steuern der Position eines reflektierenden Elements eines Rückspiegels (10) bei einem Fahrzeug, welches mit Folgendem ausgestattet ist:
positionsanpassenden Schaltmitteln (12), die dafür geeignet sind, von einem Benutzer Bewegungsbefehle zu empfangen und die Bewegungsmittel des reflektierenden Elements zu steuern;
Sensormitteln zum Ermitteln der Ausrichtung des reflektierenden Elements in einem vorbestimmten Bezugssystem, und
einer Führungseinheit (16), die dafür geeignet ist, das Speichern der erzielten Position oder das Zurücksetzen einer zuvor gespeicherten Position zu steuern,
**dadurch gekennzeichnet, dass** es ein separates Steuerkreismodul (14) umfasst, welches zwischen den positionsanpassenden Schaltmitteln (12) und den Bewegungsmitteln eingefügt ist und Folgendes umfasst:
- erste Eingänge, die dafür geeignet sind, von den Einstellungsmitteln (12) Einstellungssignale zu empfangen, welche die auf das reflektierende Element zu übertragenden Bewegungsbefehle anzeigen,
- zweite Eingänge, die dafür geeignet sind, von den Sensormitteln Positionssignale zu empfangen, welche die Ausrichtung des reflektierenden Elements anzeigen, und
- Steuerausgänge, die dafür geeignet sind, Signale zum Steuern der Bewegungsmittel auszusenden,
wobei das separate Steuerkreismodul (14) dafür geeignet ist, die Einstellungssignale in einem ersten Betriebszustand zu den Steuerausgängen zu übertragen, um basierend auf den Positionssignalen, die in einem zweiten Betriebszustand empfangen werden, Positionsdaten zu speichern und um an den Steuerausgängen Treibsignale zu erzeugen, und zwar basierend auf einem Vergleich zwischen den gespeicherten Positionsdaten und Signalen bezüglich der momentanen Position in einem dritten Betriebszustand.

2. System gemäß Anspruch 1, **dadurch gekennzeichnet, dass** die Führungseinheit (16) direkt mit dem Benutzer zur Verfügung stehenden Steuerinstrumenten verbunden ist.

3. System gemäß Anspruch 1, **dadurch gekennzeichnet, dass** die Führungseinheit (16) mit einer Einheit zum Regeln der automatischen Einstellung und Speicherung der Position des Fahrersitzes kombiniert ist.

4. System gemäß Anspruch 2 oder Anspruch 3, **dadurch gekennzeichnet, dass** die Führungseinheit (16) dazu eingerichtet ist, einen Speicherindex, der die zu speichernden Positionsdaten identifiziert, zuzuweisen und den Speicherindex zum separaten Steuerkreismodul (14) zu übertragen.

5. System gemäß Anspruch 3, **dadurch gekennzeichnet, dass** die Führungseinheit (16) dazu eingerichtet ist, einen Speicherindex, der einem der jeweiligen Fahrersitzposition zugewiesenen Eingangsindex entspricht, zum separaten Steuerkreismodul (14) zu übertragen.

6. System gemäß einem der vorhergehenden Ansprüche, **dadurch gekennzeichnet, dass** das separate Steuerkreismodul (14) mittels einer Serial Line (SL) mit der Führungseinheit (16) zur Positionsspeicherung verbunden ist.

7. System gemäß einem der vorhergehenden Ansprüche, **dadurch gekennzeichnet, dass** es ein separates Steuerkreismodul (14) umfasst, das mit jedem Rückspiegel (10) verbunden ist.

8. System gemäß einem der Ansprüche 1 bis 6, **dadurch gekennzeichnet, dass** es ein einzelnes separates Steuerkreismodul (14) umfasst, das allen Rückspiegeln (10) des Fahrzeugs gemeinsam ist.

9. System gemäß einem der vorhergehenden Ansprüche, **dadurch gekennzeichnet, dass** die Steuerausgänge durch drei Drähte (w₁) mit den Bewegungsmitteln des reflektierenden Elements eines Spiegels (10) verbunden sind, um zum Schwenken um eine erste Achse ein erstes Treibsignal zu einem Motor, zum Schwenken um eine zweite Achse ein zweites Treibsignal zu einem Motor bzw. ein gemeinsames Bezugssignal zu übertragen.

10. System gemäß einem der vorhergehenden Ansprüche, **dadurch gekennzeichnet, dass** die zweiten Eingänge durch drei Drähte (w₂) mit den zu einem Spiegel (10) gehörigen Sensormitteln verbunden sind, um Signale bezüglich einer Winkelposition in einer Horizontalebene und einer Winkelposition in einer Vertikalebene bzw. ein gemeinsames Bezugssignal zu empfangen.

11. System gemäß Anspruch 10, **dadurch gekennzeichnet, dass** die Sensormittel zum Ermitteln der Winkelposition des reflektierenden Elements zu den Schwenlanotoren gehörige, potentiometrische Widerstandssensoren umfassen.

12. System gemäß einem der vorhergehenden Ansprüche, **dadurch gekennzeichnet, dass** die Führungseinheit (16) mit einer zentralen elektronischen Einheit (20) zum Steuern der Fahrgastraum- und Karosseriefunktionen des Fahrzeugs verbunden ist.

13. System gemäß einem der vorhergehenden Ansprüche, **dadurch gekennzeichnet, dass** das separate Steuerkreismodul (14) Folgendes umfasst:
einen Schaltkreis (30) zum Verwalten digitaler Eingaben, um die Spiegelbewegungs-Einstellungssignale (10) zu empfangen,
ein Mikrosteuergerät (32) einschließlich Speichermitteln,
eine Treiberschaltung (34) mit einer Anzahl von Ausgängen, die der Anzahl von digitalen Eingaben entspricht, und die dafür geeignet ist, Leistungssignale zum Steuern der Elektromotoren der Spiegel (10) auszusenden, und
einen Schaltkreis (36) zum Verwalten analoger Eingaben, um Signale zu empfangen, welche die momentan vom reflektierenden Element des Spiegels (10) eingenommene Winkelposition anzeigen.

14. System gemäß Anspruch 13, **dadurch gekennzeichnet, dass** das Mikrosteuergerät (32) durch eine entsprechende Schnittstellenschaltung (38) mit der Serial Line (SL) zur Kommunikation mit der Führungseinheit (16) gekoppelt ist.

15. System gemäß Anspruch 14, **dadurch gekennzeichnet, dass** die Ausrichtung eines Spiegels (10) in einem Speicherregister des Mikrosteuergeräts (32) lokal gespeichert ist, und zwar als Paar von Koordinaten, welche die Winkelposition anzeigen, die vom reflektierenden Element innerhalb eines vorbestimmten Bezugssystems erreicht wird.

16. Separates Steuerkreismodul (14) zum Speichern und Zurücksetzen der Position eines reflektierenden Elements zumindest eines Rückspiegels (10) bei einem Fahrzeug, zur Verwendung in einem System gemäß den Ansprüchen 1 bis 15.

## Revendications

1. Système pour commander l'attitude d'un élément réflecteur d'un rétroviseur (10) dans un véhicule, comportant :
un moyen formant circuit de réglage d'attitude (12) conçu pour recevoir des instructions de mouvements émanant d'un utilisateur et à entraîner un moyen de déplacement de l'élément réflecteur ;
des moyens formant capteurs pour détecter l'orientation de l'élément réflecteur dans un système de référence prédéterminé, et
une unité de gestion (16) conçue pour commander la mémorisation de l'attitude atteinte ou la remise à zéro d'une attitude préalablement mémorisée,
**caractérisé en ce qu'**il comprend un module séparé (14) de circuit de commande qui est intercalé entre le moyen formant circuit de réglage d'attitude (12) et le moyen de déplacement et qui comporte :
- des premières entrées destinées à recevoir du moyen de réglage (12) des signaux de réglage indiquant les instructions de mouvements à appliquer à l'élément réflecteur,
- des deuxièmes entrées destinées à recevoir des moyens formant capteurs des signaux de position indiquant l'orientation de l'élément réflecteur, et
- des sorties de commande destinées à émettre des signaux pour entraîner le moyen de mouvement,
le module séparé de circuit de commande (14) étant apte à transmettre les signaux de réglage aux sorties de commande dans une première condition de fonctionnement, pour mémoriser des données d'attitude d'après les signaux de position reçus dans une deuxième condition de fonctionnement, et à générer des signaux d'entraînement aux sorties de commande d'après une comparaison entre les données d'attitude mémorisées et des signaux relatifs à une position instantanée dans une troisième condition de fonctionnement.

2. Système selon la revendication 1, **caractérisé en ce que** l'unité de gestion (16) est directement connectée à des instruments de commande à disposition d'un utilisateur.

3. Système selon la revendication 1, **caractérisé en ce que** l'unité de gestion (16) est combinée avec une unité pour gérer le réglage et la mémorisation automatique de l'attitude du siège du conducteur.

4. Système selon la revendication 2 ou la revendication 3, **caractérisé en ce que** l'unité de gestion (16) est conçue pour affecter un index de mémoire identifiant les données d'attitude à mémoriser et pour communiquer l'index de mémoire au module séparé (14) de circuit de commande.

5. Système selon la revendication 3, **caractérisé en ce que** l'unité de gestion (16) est conçue pour communiquer au module séparé (14) de circuit de commande un index de mémoire correspondant à un index d'entrée attribué à l'attitude respective du siège du conducteur.

6. Système selon l'une quelconque des revendications précédentes, **caractérisé en ce que** le module séparé (14) de circuit de commande est connecté par l'intermédiaire d'une ligne série (SL) à l'unité de gestion (16) de mémorisation d'attitude.

7. Système selon l'une quelconque des revendications précédentes, **caractérisé en ce qu'**il comprend un module séparé (14) de circuit de commande associé à chaque rétroviseur (10).

8. Système selon l'une quelconque des revendications 1 à 6, **caractérisé en ce qu'**il comprend un seul module séparé (14) de circuit de commande, commun à tous les rétroviseurs (10) du véhicule.

9. Système selon l'une quelconque des revendications précédentes, **caractérisé en ce que** les sorties de commande sont connectées au moyen de déplacement de l'élément réflecteur d'un rétroviseur (10) au moyen de trois fils (w₁) pour transmettre respectivement un premier signal d'entraînement à un moteur pour un pivotement autour d'un premier axe, un deuxième signal d'entraînement à un moteur pour un pivotement autour d'un deuxième axe et un signal de référence commun.

10. Système selon l'une quelconque des revendications précédentes, **caractérisé en ce que** les deuxièmes entrées sont connectées aux moyens formant capteurs associés à un rétroviseur (10) à l'aide de trois fils (w₂) pour recevoir respectivement des signaux relatifs à une position angulaire dans un plan horizontal et à une position angulaire dans un plan vertical, et un signal de référence commun.

11. Système selon la revendication 10, **caractérisé en ce que** les moyens formant capteurs pour détecter la position angulaire de l'élément réflecteur sont constitués par des capteurs potentiométriques résistifs associés aux moteurs de pivotement.

12. Système selon l'une quelconque des revendications précédentes, **caractérisé en ce que** l'unité de gestion (16) est connectée à un processeur central (20) pour commander les fonctions du véhicule concernant l'habitacle et la carrosserie.

13. Système selon l'une quelconque des revendications précédentes, **caractérisé en ce que** le module séparé (14) de circuits de commande comprend :
un circuit (30) pour gérer des entrées numériques, pour recevoir les signaux (10) de réglage de mouvement des rétroviseurs,
un microcontrôleur (32) contrôlant un moyen formant mémoire,
un circuit d'attaque (34) ayant un nombre de sorties égal au nombre d'entrées numériques et conçu pour émettre des signaux électriques afin d'entraîner les moteurs électriques des rétroviseurs (10), et
un circuit (36) pour gérer des entrées analogiques, pour recevoir des signaux indiquant la position angulaire adoptée instantanément par l'élément réflecteur du rétroviseur (10).

14. Système selon la revendication 13, **caractérisé en ce que** le microcontrôleur (32) est en interface avec la ligne série (SL) pour communiquer avec l'unité de gestion (16) par l'intermédiaire d'un circuit d'interfaçage correspondant (38).

15. Système selon la revendication 14, **caractérisé en ce que** l'orientation d'un miroir (10) est mémorisée localement dans un registre de mémoire du microcontrôleur (32), sous la forme d'une paire de coordonnées indiquant la position angulaire atteinte par l'élément réflecteur dans un système de référence prédéterminée.

16. Module séparé (14) de circuits de commande pour mémoriser et remettre à zéro l'attitude d'un élément réflecteur d'au moins un rétroviseur (10) dans un véhicule, destiné à être utilisé dans un système selon les revendications 1 à 15.
